(19) Europäisches Patentamt
European Patent Office
Office européen des brevets

(11) **EP 3 872 122 A1**

(12) **EUROPEAN PATENT APPLICATION**

(43) Date of publication:
01.09.2021 Bulletin 2021/35

(51) Int Cl.:
***C08J 9/00*** (2006.01)  ***C08J 9/36*** (2006.01)
***C08J 9/12*** (2006.01)

(21) Application number: 21158184.8

(22) Date of filing: 19.02.2021

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.02.2020 JP 2020030475
01.02.2021 JP 2021014412

(71) Applicant: Ricoh Company, Ltd.
Tokyo 143-8555 (JP)

(72) Inventors:
• **Sugiura, Hideki**
**Ohta-ku**
**Tokyo 143-8555 (JP)**

• **Nakayama, Shinya**
**Ohta-ku**
**Tokyo 143-8555 (JP)**
• **Nemoto, Taichi**
**Ohta-ku**
**Tokyo 143-8555 (JP)**
• **Yamashita, Hiroshi**
**Ohta-ku**
**Tokyo 143-8555 (JP)**
• **Mizoguchi, Yuka**
**Ohta-ku**
**Tokyo 143-8555 (JP)**

(74) Representative: **White, Duncan Rohan**
**Marks & Clerk LLP**
**Fletcher House**
**Heatley Road**
**The Oxford Science Park**
**Oxford OX4 4GE (GB)**

(54) **FOAMED BODY, FOAMED SHEET, MANUFACTURE, AND METHOD FOR PRODUCING FOAMED SHEET**

(57) A foamed body includes a polylactic acid resin and inorganic particles. A proportion of the polylactic acid resin in the foamed body is 95% by mass or more. A proportion of the inorganic particles in the foamed body is from 0.01% by mass or more but 5% by mass or less. A thickness of the foamed body at which an ISO brightness of the foamed body is 90% or more is 500 micrometers or less.

FIG. 1

**Description**

BACKGROUND

Technical Field

The present disclosure relates to a foamed body, a foamed sheet, a manufacture, and a method for producing a foamed sheet.

Description of the Related Art

In recent years, global warming due to increase in the carbon dioxide concentration in the atmosphere has been becoming an issue on the worldwide scale. In various industries, developments of techniques to reduce carbon dioxide emission to the atmosphere have been conducted. In particular, in the field of plastic products, plastics produced from commonly-used, oil-derived raw materials release carbon dioxide into the atmosphere when incinerated after use. This is one cause of the problematic increase in carbon dioxide in the atmosphere.

Under such circumstances, following the concept of carbon neutral, plant-derived raw materials and plastics have recently attracted attention. Among the plant-derived raw materials, the recent attention has been directed to the features of polylactic acid that it has biodegradability and is a plant-derived raw material.

In order to widely use polylactic acid, foamed sheets have been proposed in which the polylactic acid is foamed to reduce the amount of the polylactic acid (see, for example, JP-2007-46019-A, JP-5207277-B, JP-5454137-B, and JP-2009-073955-A). Also, the polylactic acid has actively been processed into a sheet once, so as to make it easier to process the polylactic acid into various shapes depending on applications such as a bag, a container, and a tray. However, there are a small number of proposals of foamed sheets obtained by foaming the polylactic acid.

It is generally known that aliphatic polyesters including polylactic acid are difficult to mold. In view thereof, JP-2007-46019-A proposes to mix polylactic acid with other resins to perform reforming of polylactic acid and a polylactic acid sheet. However, the above proposal to mix polylactic acid with other resins produces a resin that is not easily biodegradable as a whole, because the other resins are not easily biodegradable.

A foamed sheet obtained by foaming a resin is preferable in terms of being able to reduce the amount of the resin to reduce the weight. In order to achieve both sufficient strength and sufficient flexibility in the foamed sheet, there is a need to disperse foams uniformly and finely in terms of the diameters of the foams.

The finely foamed body disclosed in JP-5207277-B is produced using carbon dioxide in the supercritical state as a foaming agent and has a foam diameter of 1 micrometer or less. The carbon dioxide in the supercritical state has a structure similar to the backbone of an aliphatic polyester. Thus, the carbon dioxide in the supercritical state has a high affinity to the aliphatic polyester resin and is considered to be suitable as a foaming agent. In this proposal, however, the foamed body can only be produced in a batch-type apparatus, and cannot be mass-produced on an industrial scale through a continuous process.

It is known that once an aliphatic polyester resin typified by polylactic acid has been in the vicinity of the melting point thereof, the viscosity of the aliphatic polyester resin drastically decreases. This is likely to cause, for example, breakage of foams and coalescence of foams. As a result, it is difficult to make the foam diameter fine and uniform in the first place.

Plastics are used for various applications, and plastics having high brightness tend to be preferable.

A proposal for increasing the brightness of plastics is to incorporate inorganic substances (inorganic particles) into a resin to increase the brightness of plastics. In general, the brightness of plastics increases with the increase in the amount of the inorganic substances. From the viewpoint of recycle in the environment, however, the inorganic substances are unnecessary substances at the time of material recycle, which is why it is preferable to reduce the amount of the inorganic substances as much as possible. It is known that incorporation of the inorganic substances into the resin allows the resin to have an increased strength by virtue of the inorganic substances; however, flexibility and other properties of the resin degrade (the resultant product is hard but brittle, and the impact resistance become low). It is also known that, due to the presence of the inorganic substances, the surface appearance has, for example, observable swirl marks, pockmark-like irregularities, and broken foam shapes.

SUMMARY

The present disclosure has an object to provide a foamed body excellent in strength, flexibility, and surface appearance.

According to one aspect of the present disclosure, a foamed body includes a polylactic acid resin and inorganic particles. A proportion of the polylactic acid resin in the foamed body is 95% by mass or more. A proportion of the inorganic particles in the foamed body is from 0.01% by mass or more but 5% by mass or less. A thickness of the foamed body at which an ISO brightness of the foamed body is 90% or more is 500 micrometers or less.

According to the present disclosure, it is possible to provide a foamed body excellent in strength, flexibility, and surface appearance.

BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:

FIG. 1 is a phase diagram illustrating states of a substance changeable depending on temperature and pressure;
FIG. 2 is a phase diagram for defining a range of a compressive fluid;
FIG. 3 is a schematic view illustrating one example of a continuous kneading apparatus used for producing a foamed body of the present disclosure; and
FIG. 4 is a schematic view illustrating one example of a continuous foaming apparatus used for producing a foamed body of the present disclosure.

DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise.

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

(Foamed body)

A foamed body of the present disclosure includes polylactic acid (hereinafter also referred to as a "polylactic acid resin") and inorganic particles, and if necessary further includes other ingredients.

The present inventors conducted studies in an attempt to obtain a foamed body that can solve the problems as described above; i.e., a foamed body that contains a large amount of low-environment-load materials and can achieve both sufficient strength and sufficient flexibility.

The inorganic particles in an amount of 5% by mass or less relative to the entire resin are considered to have insignificant effects on recycle. In view thereof, the present inventors have found that sufficient brightness of the foamed body in this range of the amount means that the inorganic particles in the foamed body are in a highly dispersed state and the cells of the foamed body are sufficiently large and uniform. The foamed body having sufficiently large and uniform cells is a foamed body excellent in strength and flexibility.

Moreover, the present inventors have found that there is a correlation of strength and flexibility of the foamed body with an ISO brightness indicating the existing state of the inorganic particles in the foamed body.

In other words, they have found that the ISO brightness of the foamed body can be used as a characteristic value for strength and flexibility of the foamed body.

In view of the above, the present inventors have found that an excellent foamed body as described above can be obtained when the proportion of polylactic acid is 95% by mass or more and the proportion of the inorganic particles is from 0.01% by mass through 5% by mass relative to the entire foamed body, , and the thickness of the resultant foamed body at which an ISO brightness thereof is 90% or more is 500 micrometers or less. On the basis of this finding, the present disclosure has been completed.

<Polylactic acid resin>

A polylactic acid resin (hereinafter also referred to as "polylactic acid") is biodegraded by microorganisms and has attracted attention as an environmentally-friendly, low-environmental-load polymer material (see "Structure, physical properties, and biodegradability of aliphatic polyester of Polymer, 2001, Vol. 50, No. 6, pp. 374-377").

Examples of the polylactic acid include, but are not limited to, a copolymer between D-lactic acid and L-lactic acid, a homopolymer of D-lactic acid (D body) or L-lactic acid (L body), and ring-opening polymers of one or more lactides selected from the group consisting of D-lactide (D body), L-lactide (L body), and DL-lactide. One of these may be used alone or two or more of these may be used in combination.

When a copolymer between D-lactic acid and L-lactic acid is used as the polylactic acid, the ratio between D-lactic acid and L-lactic acid is not particularly limited and may be appropriately selected depending on the intended purpose. The copolymer between D-lactic acid and L-lactic acid, as the optical isomer of a smaller amount decreases, tends to increase in crystallinity to have an increased melting point or glass transition temperature. Meanwhile, as the optical isomer of a smaller amount increases, the copolymer tends to decrease in crystallinity to be non-crystalline eventually. Crystallinity is a contributing factor of heat resistance of a foamed sheet and a forming temperature for foaming. Thus, crystallinity may be determined depending on applications and is not particularly limited. As used herein, "crystallinity" expresses a degree of crystallization, a speed of crystallization, or both. High crystallinity means a high degree of crystallization, a high speed of crystallization, or both.

The polylactic acid used may be an appropriately synthesized product or a commercially available product.

In terms of biodegradability and recycle performance (easiness in recycle), the proportion of the polylactic acid resin is 95% by mass or more, preferably 98% by mass or more, more preferably 99% by mass or more, relative to the total amount of the foamed body. When the proportion of the polylactic acid resin is less than 95% by mass, an unfavorable phenomenon may occur where the polylactic acid resin is biodegraded but the other ingredients remain.

<Measuring method of the proportion of the polylactic acid>

The proportion of the polylactic acid can be calculated from the relative amounts of materials to be charged. When the material ratio is unknown, for example, the following gas chromatography mass spectrometry (GCMS) can be performed to identify the ingredient through comparison with known polylactic acid used as a standard sample. If necessary, the area ratio of spectra by nuclear magnetic resonance (NMR) or other analysis methods can be used in combination with the GCMS for calculation.

- Measurement by GCMS-
- GCMS: QP2010 available from Shimadzu Corporation, with Frontier Lab Py3030D as auxiliary equipment
- Separation column: Frontier Lab Ultra ALLOY UA5-30M-0.25F
- Heating temperature of sample: 300 degrees Celsius
- Column oven temperature: increasing from 50 degrees Celsius (retained for 1 minute) at 15 degrees Celsius/min to 320 degrees Celsius (6 minutes)
- Ionization method: Electron Ionization (E.I) method
- Detection mass range: 25 to 700 (m/z)

<Inorganic particles>

The inorganic particles are contained for adjusting, for example, the size and amount of foams of the foamed body.

The inorganic particles may also serve as a foam nucleating material. The inorganic particles serving as the foam nucleating material may also be referred to as filler.

Examples of the inorganic particles include, but are not limited to, talc, kaolin, calcium carbonate, titanium oxide, layered silicate, zinc carbonate, wollastonite, silica, alumina, magnesium oxide, calcium silicate, sodium aluminate, calcium aluminate, sodium aluminosilicate, magnesium silicate, glass balloon, carbon black, zinc oxide, antimony trioxide, zeolite, hydrotalcite, metal fibers, metal whiskers, ceramic whiskers, potassium titanate, boron nitride, graphite, glass fibers, and carbon fibers.

Among them, silica is preferable in terms of its high affinity to the below-described compressive fluid.

Silica is a substance containing silicon dioxide represented by $SiO_2$ as a main ingredient. Depending on the production method of silica particles, it is roughly classified into fumed silica and wet silica. In the present disclosure, any of fumed silica and wet silica can be used.

If necessary, the silica is subjected to a surface treatment with a reactive compound such as a silane coupling agent, a titanate coupling agent, or organosiloxane.

In particular, a silane coupling agent can be suitably used for the surface treatment of silica particles. Specific examples of the silane coupling agent include, but are not limited to, hexamethyldisilazane, vinyltrimethoxysilane, gamma-glycidoxypropyltrimethoxysilane, gamma-methacryloxypropyltrimethoxysilane, gamma-aminopropyltrimethoxysilane, and gamma-mercaptopropyltriethoxysilane.

The proportion of the silica is preferably 50% by mass or more, 60% by mass or more, relative to the total amount of the inorganic particles.

The proportion of silica is preferably 100% by mass or less.

When the proportion of silica is 50% by mass or more, the resultant foams become uniform and fine.

The number average particle diameter of the inorganic particles is preferably 5 nm (0.005 micrometers) or more but 100 nm (0.1 micrometers) or less, more preferably 10 nm (0.01 micrometers) or more but 100 nm (0.1 micrometers) or less. When the number average particle diameter is 5 nm or more, the inorganic particles are excellent in dispersibility to increase the number of the interfaces between the inorganic particles and the polylactic acid, resulting in improvement in physical properties as sheet such as impact resistance of the resultant foamed body. When the number average particle diameter is 100 nm or less, it is possible to achieve uniform foam diameters that are sufficiently large.

The number average particle diameter of the inorganic particles may be expressed with a BET specific surface area by conveniently assuming the inorganic particles as a true sphere. In this case, the BET specific surface area is from 20 $m^2$/g through 5,000 $m^2$/g.

The number average particle diameter of the inorganic particles is an average particle diameter that can be determined by observing the inorganic particles (filler) in the foamed body with a transmission electron microscope (TEM) at a magnification of ×50,000. Incidentally, the number of particles used for calculation is 100.

The proportion of the inorganic particles is not particularly limited and may be appropriately selected depending on the intended purpose as long as the physical properties of the foamed sheet are not degraded. It is preferably from 0.01% by mass through 5% by mass, preferably from 0.1% by mass through 5% by mass, more preferably from 0.2% by mass through 3% by mass, relative to the entire foamed body. When the proportion of the inorganic particles is less than 0.01% by mass, foaming is insufficient. When it is more than 5% by mass, the inorganic particles may aggregate together.

The proportion of the inorganic particles can be calculated from the amount of inorganic particles used when producing the foamed body. The proportion of the inorganic particles can also be calculated through elemental analysis (EA) (O, N, H).

For example, the foamed body is placed in a graphite crucible with a flux, and is melted and decomposed through resistance heating of an impulse furnace in the stream of helium. Oxygen and hydrogen can be quantitatively detected as carbon dioxide and water, respectively, with an infrared detector, and nitrogen can be quantitatively detected as is with a thermal conductivity detector.

<Other ingredients>

The other ingredients are not particularly limited and may be appropriately selected depending on the intended purpose as long as they are usually contained in the foamed body. Examples of the other ingredients include, but are not limited to, a crosslinking agent.

The crosslinking agent is preferably a (meth)acrylic acid ester compound containing two or more (meth)acrylic groups in a molecule thereof or a (meth)acrylic acid ester compound containing one or more (meth)acrylic groups and one or more glycidyl groups or vinyl groups in a molecule thereof. This is because such a (meth)acrylic acid ester compound has high reactivity with a polylactic acid resin to leave a small amount of the monomer, and colors the resin to a small extent.

Specific examples of the (meth)acrylic acid ester compound include, but are not limited to, glycidyl methacrylate, glycidyl acrylate, glycerol dimethacrylate, trimethylolpropane trimethacrylate, trimethylolpropane triacrylate, allyloxypolyethylene glycol monoacrylate, allyloxypolyethylene glycol monomethacrylate, polyethylene glycol dimethacrylate, polyethylene glycol diacrylate, polypropylene glycol dimethacrylate, polypropylene glycol diacrylate, and polytetramethylene glycol dimethacrylate. It may be a copolymer of alkylenes in which the alkylene glycol moieties in the above-listed compounds have various lengths. Further examples include butanediol methacrylate and butanediol acrylate.

Incorporation of the crosslinking agent can impart melt tension to adjust the expansion ratio of a foamed body. A method of imparting melt tension is, for example, a method of dispersing a foam nucleating material such as layered silicate at a nano level, a method of crosslinking a resin composition using, for example, a crosslinking agent or a crosslinking aid, a method of crosslinking a resin composition with, for example, electron beams, or a method of adding another resin composition having a high melt tension.

In addition to the above, the other ingredients include additives such as a thermal stabilizer, an antioxidant, and a plasticizer. One of these may be used alone or two or more of these may be used in combination.

In terms of recycle performance, the proportion of the other ingredients is preferably 2% by mass or less, more preferably 1% by mass or less, relative to the total amount of the foamed body.

<Physical properties of the foamed body>

The thickness of the foamed body of the present disclosure at which an ISO brightness of the foamed body is 90% or more is 500 micrometers or less, preferably 300 micrometers or less.

That the thickness at which an ISO brightness of the foamed body is 90% or more is 500 micrometers or less means that the foamed body exhibits sufficiently white color even in the form of a thin film. It also means that in the foamed body, the inorganic particles are in a highly dispersed state, cells having sufficient sizes are formed, and a sufficient existing state (dispersed state) is formed. This means that it becomes possible to achieve both sufficient flexibility and sufficient strength of the foamed body.

When the thickness at which an ISO brightness of the foamed body is 90% or more is more than 500 micrometers, it is meant that the foamed body is in the state having no sufficient ISO brightness; i.e., the size of cells and the existing state of the cells are not uniform. This may cause an unfavorable phenomenon where it is not possible to achieve both sufficient flexibility and sufficient strength of the foamed body.

Here, a mechanism will be discussed where the ISO brightness can characterize the state of cells in the foamed body.

A typical brightness is called Hunter brightness, which is known to be determined in the following manner, for example. Specifically, a spectral color difference meter SE-2000 (available from NIPPON DENSHOKU INDUSTRIES CO., LTD.) or a similar device is used to determine L,a,b values, which are used in the following formula according to the JIS L1015 C method to determine the brightness.

$$\text{Brightness (\%)} = 100 - [(100-L)^2 + a^2 + b^2]^{1/2}$$

The Hunter brightness is merely a measurement of reflectance of incident light from one direction (45 degrees). This is known to be inappropriate when the surface of interest is not smooth. This is because an obtained measurement varies with the surface profile and does not characterize the state of the inside of the foamed body.

Meanwhile, the ISO brightness does not receive any influence of the surface by employing a measurement device using an integrating sphere with a diffuse reflection surface (a diffuse reflectance meter) and it is considered that the ISO brightness can characterize the state of diffuse reflection by the cells inside the foamed body. Therefore, the brightness in the present disclosure is defined as the ISO brightness.

The ISO brightness is specifically measured with a spectral brightness meter/color difference meter (PF-10R, available from NIPPON DENSHOKU INDUSTRIES CO., LTD.). How to operate it is according to the instruction manual given by the manufacturer, and evaluation is based on JIS P 8148:2001 "Paper, board and pulps-ISO brightness (diffuse blue light reflectance) measurement method".

The thickness at which the ISO brightness of the foamed body is 90% or more is specifically measured in the following manner. First, production conditions (e.g., the thickness of a die and the extrusion rate) are changed to form two kinds of sheets (A and B) having different thicknesses, and the sheets are measured for the ISO brightness.

When any one of the sheets A and B measured has the ISO brightness of 90% or more, the film thickness at which the brightness is 90% or more is calculated based on the linear approximation of two points in the relationship between the film thickness and the brightness (greater film thickness indicates higher brightness).

When both of the sheets A and B measured have the brightness of 90% or less or 90% or more, the thickness near 90% of the brightness is predicted through extrapolation by linear approximation of two points in the relationship between the film thickness and the brightness. Then, a sample having a film thickness around 90% of the brightness is prepared, and similar to the above, the film thickness at which the brightness is 90% is calculated.

The average foam diameter of the foamed body of the present disclosure is preferably 0.01 micrometers or more but 15 micrometers or less, more preferably 0.1 micrometers or more but 8 micrometer or less. When the average foam diameter is 0.01 micrometers or more, the foamed body has excellent flexibility because it is not too small. When the average foam diameter is 15 micrometers or less, the foamed body has excellent strength because it is not too large.

A method of measuring the average foam diameter of the foamed body is not particularly limited and may be appropriately selected depending on the intended purpose. For example, the average foam diameter of the foamed sheet can be measured by subjecting the foamed sheet to cross-section processing with an ion milling device and observing the resultant cross section with a SEM.

Using software of Image-Pro Premier (available from mediacy Co.) for the obtained cross-section SEM image (at a magnification of ×3,000), the gray components representing the foams (pores) and the resin components (white) are binarized. In an area of 35 micrometers × 20 micrometers, the average particle diameter (Feret diameter) is determined. The gray components (foams) having Feret diameters of 0.5 micrometers or more are calculated for the average foam diameter.

The bulk density of the foamed body is preferably 0.02 g/cm$^3$ or more but 0.9 g/cm$^3$ or less, more preferably 0.02 g/cm$^3$ or more but 0.7 g/cm$^3$ or less, further more preferably 0.02 g/cm$^3$ or more but 0.5 g/cm$^3$ or less.

When the bulk density is 0.02 g/cm$^3$ or more, the foamed body can maintain sufficient strength. When the bulk density is 0.9 g/cm$^3$ or less, the foamed body has excellent flexibility and has flexible and hard properties.

The bulk density of the foamed body can be measured according to, for example, JIS K 7365.

The foamed body of the present disclosure may be used as, for example, the below-described manufacture. For example, printing may be performed before use on the foamed body without any pre-treatment. Alternatively, a mold may be used to process the foamed body to obtain a product.

(Foamed sheet)

A foamed sheet of the present disclosure includes the foamed body of the present disclosure, and if necessary further includes other ingredients.

The other ingredients are not particularly limited and may be appropriately selected depending on the intended purpose as long as they are contained in typical resin products.

The average thickness of the foamed sheet is preferably 0.001 mm or more but 4 mm or less, more preferably 0.001 mm or more but 1 mm or less. When the average thickness is 4 mm or less, processability with a mold becomes better.

The foamed sheet of the present disclosure is in the finely and uniformly foamed state, which makes it possible to thin the sheet.

A ratio of a length of a longer side (micrometers) in sides of the foamed sheet in a machine direction (MD) and a transverse direction (TD) to the average thickness (micrometers), which is represented by ratio (longer side/thickness), is preferably 250 or more, more preferably 2,500 or more.

When the ratio (longer side/thickness) is 250 or more, the foamed sheet is easy to process as a sheet.

The foamed sheet of the present disclosure may be used as the below-described manufacture. For example, printing may be performed before use on the sheet without any pre-treatment. Alternatively, a mold may be used to process the foamed sheet to obtain a product.

A method of processing the sheet using a mold is not particularly limited and may be a hitherto known method for thermoplastic resins. Examples of the method include, but are not limited to, vacuum molding, air pressure molding, vacuum air pressure molding, and press molding.

At least one of the front surface and the back surface of the foamed sheet of the present disclosure may include at least one of a lamination layer, a coating layer, and a surface vapor deposition layer.

The lamination, coating, and surface vapor deposition can be performed by any of the respective known methods.

Examples of the shape of a multi-layered body obtained by subjecting the foamed sheet to the above processing include, but are not limited to, a sheet and a bottle. Also, in the present disclosure, the multi-layered body as a sheet may be molded and processed into a multi-layered molded product.

Examples of a production method of the multi-layered body as a sheet include, but are not limited to, method (1) in which a foamed sheet (A) is formed in advance and resin (B) is extruded onto this sheet from a typical melt extruder to form a layer thereon (extrusion lamination) and method (2) in which two extruders are provided with one extruder being allowed to extrude polylactic acid-based resin (C) to form a sheet at the same time as extrusion of resin (B) from the other extruder (co-extrusion).

(Manufacture)

A manufacture (manufactured product or article) of the present disclosure includes the foamed sheet of the present disclosure and if necessary further includes other ingredients.

The other ingredients are not particularly limited and may be appropriately selected depending on the intended purpose as long as they are usually used in resin products.

Examples of the manufacture (which may be referred to as a "consumption material") include, but are not limited to, a bag, a packaging container, a tray, dishware, cutlery, stationery, and livingware. The concept of this manufacture includes not only a manufacture alone as a single product, but also parts formed of the manufacture such as a handle of the tray and products provided with manufactures such as a tray with a handle.

Examples of the bag include, but are not limited to, a plastic bag, a shopping bag, and a garbage bag.

Examples of the stationery include, but are not limited to, a file folder and a badge.

Examples of the packaging container include, but are not limited to, a food container, an agricultural/gardening container, a blister pack container, a press-through pack container, variously made bags, and a fluid container. Specific examples of the food container include, but are not limited to, a fresh food tray, an instant food container, a fast food container, and a lunch box. Specific examples of the agricultural/gardening container include, but are not limited to, a seedling pot. Specific examples of the blister pack container include, but are not limited to, a food container and packaging containers for various groups of products such as office supplies, toys, cells, and batteries. Specific examples of the fluid container include: but are not limited to, a beverage cup or bottle for dairy products, soft drinks, and alcoholic beverages; a temporary storage container for seasonings such as soy sauce, sauce, mayonnaise, ketchup, and cooking oil; containers for shampoo and rinse; a cosmetic container; and an agricultural chemical container.

Existing foamed sheets have problems with physical properties as sheets such as sheet strength and flexibility because foam diameters and variation therein are large.

The manufacture molded using the foamed sheet of the present disclosure has excellent physical properties, and thus can be used in a wide variety of applications such as sheets for industrial materials, commodities, agriculture, foods, pharmaceuticals, and cosmetics; packaging materials; and trays.

The foamed sheet of the present disclosure is useful in applications requiring biodegradability of the foamed sheet, especially as a packaging material used for foods and a medical-use sheet for, for example, cosmetics and pharmaceuticals. For example, thinning the foamed sheet can be expected for the resultant foamed sheet to have improved performances.

(Method for producing the foamed body)

A method for producing the foamed sheet of the present disclosure includes a kneading step and a foaming step and if necessary further includes other steps.

The kneading step and the foaming step may be performed at the same time or as separate steps.

<Kneading step>

The kneading step is a step of kneading the polylactic acid resin and the inorganic particles in the presence of a compressive fluid at a temperature lower than the melting point of the polylactic acid resin.

In the kneading step, for more efficient foaming, a foaming agent may be added besides the polylactic acid resin and the inorganic particles.

Incidentally, a kneaded product of the polylactic acid resin and the inorganic particles before foaming may be referred to as a polylactic acid resin composition or a masterbatch.

«Foaming agent»

In terms of the ability to easily produce a polylactic acid-based resin foamed sheet having a high expansion ratio, examples of the foaming agent include: but are not limited to, hydrocarbons including lower alkanes such as propane, normal butane, iso butane, normal pentane, iso pentane, and hexane; ethers such as dimethyl ether; halogenated hydrocarbons such as methyl chloride and ethyl chloride; and physical foaming agents such as compressive gases of, for example, carbon dioxide and nitrogen.

Among them, use of compressive gases of, for example, carbon dioxide and nitrogen is preferable from the viewpoints of being odorless, able to be handled safely, and low in environmental load.

The aliphatic polyester has such a property that its melt viscosity drastically decreases after the melting point. Thus, in kneading the inorganic particles (filler) and other materials, the inorganic particles easily aggregate. This phenomenon is significant when the size of the inorganic particles is small.

In the present disclosure, in order to uniformly disperse the inorganic particles in polylactic acid having such a property, a compressive fluid is used for the kneading. Incidentally, when the compressive fluid is the same as the foaming agent, kneading of the inorganic particles and foaming can be performed as a single process, which is more preferable as the form of production from the viewpoint of reduction in environmental load.

Description will be given to the reason why use of a compressive fluid is preferable in kneading the inorganic particles and the polylactic acid resin.

It is generally known that the compressive fluid plasticizes a resin to decrease a melt viscosity of the resin (see "Latest application technique of supercritical fluid", NTS). A decrease in the melt viscosity and an improvement in the kneading performance seem to be contradictory. Actually, a pressure may be applied without using the compressive fluid for kneading general inorganic particles (filler), but this decreases the free volume of the resin to aim at an increase in interaction between the resins (increase in viscosity), which is opposite to plasticization of the resin (see "k. Yang. R. Ozisik R. Polymer, 47. 2849 (2006)").

Hitherto, it is known that a compressive fluid has such a property as to plasticize (soften) a resin, and the resin behaves like a liquid in the compressive fluid at an increased temperature. Dispersing the inorganic particles in the resin in such a state is like dispersing the inorganic particles in a liquid. As a result, the inorganic particles aggregate in the liquid to be unable to obtain a highly dispersed resin composition. In other words, the resin cannot have a suitable viscosity for kneading in the presence of the compressive fluid, and thus it had been considered difficult to use the compressive fluid for kneading the resin and the inorganic particles.

Under such circumstances, the present inventors intensively studied whether the compressive fluid can be used for kneading between the polylactic acid resin and the inorganic particles, and have found that the polylactic acid resin has a suitable viscosity for kneading at a temperature lower than the melting point of the polylactic acid resin, resulting in being able to knead the inorganic particles. In particular, the polylactic acid resin, the melt viscosity of which drastically decreases at a temperature equal to or higher than the melting point, enabled kneading only in the state of low melt viscosity. In the present disclosure, meanwhile, the inorganic particles can be kneaded in the state of high viscosity, and also the compressive fluid can be used as the foaming agent as is, which is more suitable.

«Compressive fluid»

Examples of a substance that can be used in the state of the compressive fluid include, but are not limited to, carbon monoxide, carbon dioxide, dinitrogen monoxide, nitrogen, methane, ethane, propane, 2,3-dimethylbutane, ethylene, and dimethyl ether. Among them, carbon dioxide is preferable because the critical pressure and critical temperature of carbon dioxide are about 7.4 MPa and about 31 degrees Celsius, respectively, and thus a supercritical state of carbon dioxide is easily generated. In addition, carbon dioxide is non-flammable and easily handled. One of these compressive fluids may be used alone or two or more of these compressive fluids may be used in combination.

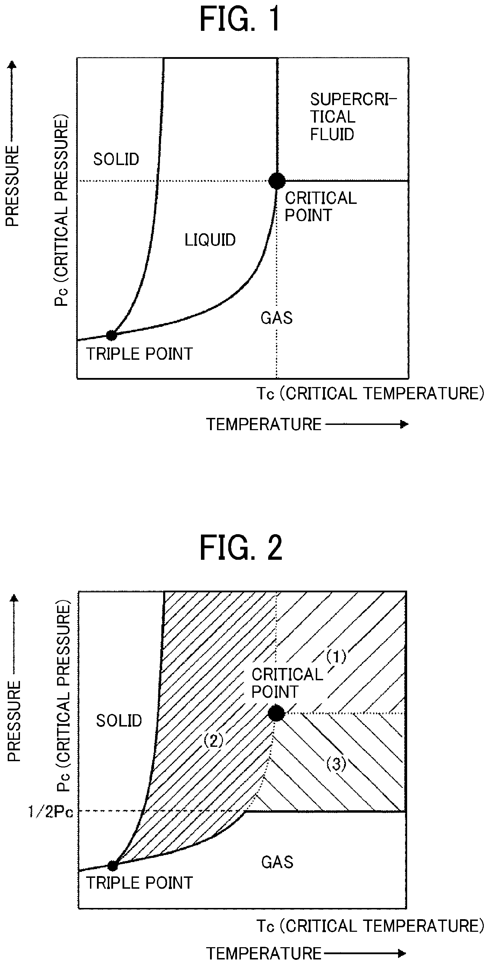

Referring now to FIG. 1 and FIG. 2, description will be given to the compressive fluid used for producing a polylactic acid resin composition. FIG. 1 is a phase diagram illustrating the state of a substance depending on pressure and temperature. FIG. 2 is a phase diagram which defines a range of a compressive fluid. The "compressive fluid" in the present embodiment refers to a state of a substance present in any one of the regions (1), (2) and (3) of FIG. 2 in the phase diagram illustrated in FIG. 1.

In such regions, the substance is known to have extremely high density and show different behaviors from those observed at normal temperature and normal pressure. Incidentally, the substance in the region (1) is a supercritical fluid. The supercritical fluid is a fluid that exists as a non-condensable high-density fluid at temperature and pressure exceeding limits (critical points) at which a gas and a liquid can coexist and that does not condense even when it is compressed. The substance in the region (2) turns into a liquid but represents a liquefied gas obtained by compressing a substance existing as a gas at normal temperature (25 degrees Celsius) and normal pressure (1 atm). The substance is in the region (3) is in the state of a gas but represents a high-pressure gas of which pressure is 1/2 or higher of the critical pressure (Pc), i.e. 1/2 Pc or higher.

Solubility of the compressive fluid varies depending on the combination of the kind of the resin and the compressive fluid and temperature and pressure. Thus, there is a need to appropriately adjust the amount of the compressive fluid supplied.

For example, in the combination of polylactic acid and carbon dioxide, the amount of the carbon dioxide supplied is preferably 2% by mass or more but 30% by mass or less. When the amount of the carbon dioxide supplied is 2% by mass or more, it is possible to prevent an unfavorable phenomenon where an obtainable plasticizing effect is limitative. When the amount of the carbon dioxide supplied is 30% by mass or less, it is possible to prevent an unfavorable phenomenon where the carbon dioxide and the polylactic acid are phase-separated to be unable to obtain the foamed body having a uniform thickness.

<Kneading apparatus>

As a kneading apparatus used for producing the polylactic acid resin composition, a continuous process may be employed or a batch process may be employed. Preferably, a reaction process is appropriately selected by considering, for example, efficiency of an apparatus, characteristics of a product, and quality.

In terms of the ability to achieve the viscosity suitable for kneading, the kneading apparatus usable is, for example, a single screw extruder, a twin screw extruder, a kneader, a screw-less basket-shaped stirring vessel, BIVOLAK (available from Sumitomo Heavy Industries, Ltd.), N-SCR (available from Mitsubishi Heavy Industries, Ltd.), or a tube-shaped polymerization vessel equipped with a spectacle-shaped blade (available from Hitachi, Ltd.), lattice-blade or Kenix-type, or Sulzer-type SMLX-type static mixer. In terms of color tone, the kneading apparatus usable is a finisher that is a self-cleaning-type polymerization apparatus, N-SCR, or a twin-screw extruder. Among them, a finisher and N-SCR are preferable in terms of production efficiency, color tone of a resin, stability, and heat resistance.

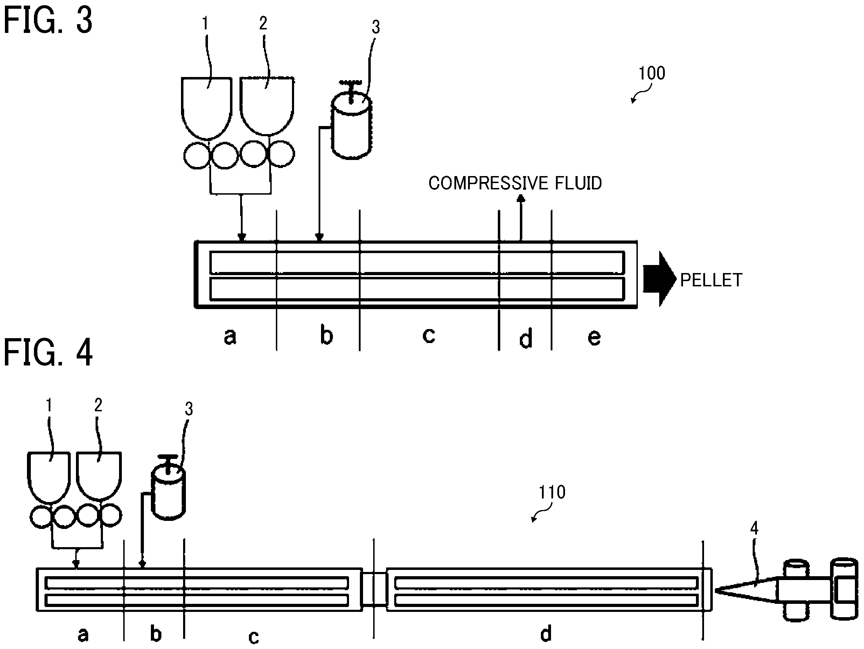

As illustrated in FIG. 3, a continuous kneading apparatus 100 uses a twin screw extruder (available from JSW) and includes (screw caliber: 42 mm, L/D=48, Device 1, which is a resin pellets supply tank), (raw material mixing and melting area a, Device 2, which is a calcium carbonate supply tank), (compressive fluid supplying area b, Device 3, which is a compressive fluid supply tank), kneading area c, molding area d, and T-die 4. A compressive fluid (liquid material) is supplied by a metering pump. Solid raw materials such as the resin pellets and calcium carbonate are supplied by a quantitative feeder.

«Raw material mixing and melting area»

In the raw material mixing and melting area, the resin pellets and the filler, which is the inorganic particles (the same applies hereinafter), are mixed and heated. The heating temperature is set to a temperature that is equal to or higher than the melting temperature of the resin, which makes it possible to uniformly mix the mixture with a compressive fluid in a subsequent area where the compressive fluid is to be supplied.

«Compressive fluid supplying area»

The resin pellets become melted through warming, and the compressive fluid is supplied in the state that the filler is wetted, to thereby plasticize the melted resin.

«Kneading area»

The temperature in the kneading area is set so that the viscosity suitable for kneading the filler is achieved. The setting temperature is not particularly limited because it varies depending on, for example, the specification of a reaction apparatus, the kind of a resin, and the structure and molecular weight of the resin. However, for commercially available polylactic acid having a weight average molecular weight (Mw) of about 200,000, the kneading is usually performed at the melting point of polylactic acid plus 10 degrees Celsius through 20 degrees Celsius. Meanwhile, the present disclosure has the feature that the kneading is performed at a temperature lower than the melting point of polylactic acid. In the present disclosure, it is possible to perform the kneading at a relatively high viscosity at the temperature lower than the melting point of polylactic acid. Specifically, the temperature for the kneading is the melting point of polylactic acid minus 20 degrees Celsius through 80 degrees Celsius, more preferably the melting point of polylactic acid minus 30 degrees Celsius through 60 degrees Celsius. Conveniently, the temperature may be set by referring to, for example, the current values of stirring power of the apparatus. However, it can be said that these setting values are usually unreachable ranges except in the present disclosure.

<Foaming step>

The foaming step is a step of removing the compressive fluid from the polylactic acid resin composition and foaming the polylactic acid resin composition.
The compressive fluid can be removed by releasing the pressure.
The temperature in the foaming step is preferably equal to or higher than the melting point of the polylactic acid resin.
The foaming step can be performed in the following manner, for example.
Specifically, a tandem extruder is used which includes a twin screw extruder (available from JSW) (screw caliber: 42 mm, L/D=48) and a second extruder (L/D: 34, caliber: 65 mm) that is coupled via a connection pipe to the tip of the twin screw extruder.
Next, carbon dioxide is forcibly inserted as a compressive fluid into the first extruder from an intermediate portion thereof, and molten polylactic acid containing inorganic particles dispersed therein (filler masterbatch) and the carbon dioxide as the compressive fluid are kneaded uniformly and cooled to a resin temperature suitable for foaming.
After that, the kneaded product was discharged (for example, at from 5 kg/h through 30 kg/h) from a circular mold having a slit diameter of 70 mm attached to the tip of the second extruder. At a certain resin temperature (for example, from 100 degrees Celsius through 200 degrees Celsius), the melted resin composition is extruded for foaming. The cylindrical polylactic acid-based foamed sheet after the extrusion foaming from the mold slit was allowed to contour on a mandrel being cooled, and the outer surface thereof was sprayed with air from an air ring for cold molding, to thereby obtain the foamed body.
In the foaming step, in response to treatments to change solubility of the compressive fluid such as pressure reduction and heating, the compressive fluid dissolved in the polylactic acid composition vaporizes at the interfaces between the inorganic particles and the polylactic acid resin, followed by precipitating, to thereby cause foaming. The foaming starts from the inorganic particles as the foam nucleating material. Thus, only when the inorganic particles are uniformly dispersed in polylactic acid, the foamed body containing uniform and fine foams can be produced.

<Other steps>

The other steps are not particularly limited and may be appropriately selected depending on the intended purpose as long as they are steps that are usually performed in the production of a foamed sheet. Examples of the other steps include a molding step of processing into a sheet.

Examples

The present disclosure will be described by way of Examples, which however should not be construed as limiting the present disclosure thereto in any way.

Fillers that were used are as follows.

1) Filler (A)
Hexamethyldisilazane (HMDS)-hydrophobized silica having a number average particle diameter of 30 nm
2) Filler (B)
Dimethyldichlorosilane-hydrophobized silica having a number average particle diameter of 15 nm
3) Filler (C)
Hexamethyldisilazane (HMDS)-hydrophobized silica having a number average particle diameter of 120 nm
4) Filler (D)
Ultrafine heavy calcium carbonate powder having a number average particle diameter of 700 nm (ACE-35, obtained from CALFINE CO., LTD.)
5) Filler (E)
Heavy calcium carbonate as a general merchandize having a number average particle diameter of 4400 nm (KS-500, obtained from CALFINE CO., LTD.)

Polylactic acid resins that were used are as follows.

1) Polylactic acid resin (A)
Revode110, obtained from HISUN, Co., melting point: 160 degrees Celsius
2) Polylactic acid resin (B)
Revode190, obtained from HISUN, Co., melting point: 175 degrees Celsius
3) Polylactic acid resin (C)
Revode101, obtained from HISUN, Co., melting point: 150 degrees Celsius
4) Polylactic acid resin (D)
Revode290, obtained from HISUN, Co., melting point: 180 degrees Celsius

(Example 1)

<Preparation of filler masterbatch>

The continuous kneading apparatus 100 illustrated in FIG. 3 was used to supply polylactic acid (A) and filler (A) as inorganic particles so that the total flow rate thereof would be 10 kg/hr. With the polylactic acid (A) being supplied at 9.7 kg/hr and the filler (A) being supplied at 0.3 kg/hr, carbon dioxide as a compressive fluid was supplied at 0.99 kg/hr (equivalent to 10% by mass relative to the polylactic acid), followed by kneading, to thereby prepare filler masterbatch pellets (A).
The temperatures of the respective zones were set as follows: the raw material mixing and melting area a and the compressive fluid supplying area b: 190 degrees Celsius; the kneading area c: 150 degrees Celsius; the compressive fluid removing area d: 190 degrees Celsius; and the molding processing area e: 190 degrees Celsius. With the pressures of the respective zones being set as follows: from the compressive fluid supplying area b to the kneading area c: 7.0 MPa; and the compressive fluid removing area d: 0.5 MPa, the composition was extruded as a strand. After cooled in a water bath, the strand was pelletized with a strand cutter to obtain a filler masterbatch (polylactic acid resin composition) containing the filler by 3% by mass.

<Production of the foamed body and the foamed sheet>

The continuous foamed sheet forming apparatus 110 illustrated in FIG. 4 was used to supply the 3% by mass filler masterbatch (A) and the polylactic acid resin (A) so that the total flow rate thereof would be 10 kg/hr. In order for the filler to be 0.5% by mass, the flow rate of the polylactic acid resin (A) and the 3% by mass filler masterbatch were set to 8.33 kg/hr and 1.67 kg/hr, respectively. Carbon dioxide as the compressive fluid was supplied at 0.99 kg/h (equivalent to 10% by mass relative to the polylactic acid resin), followed by kneading. The kneaded product was sent to the second extruder.
The kneaded product was discharged at 10 kg/h from a circular mold having a slit diameter of 70 mm attached to the tip of the second extruder, and cooled to 167 degrees Celsius as the polylactic acid resin temperature. The kneaded product was extruded for foaming. The cylindrical polylactic acid foamed sheet after the extrusion foaming from the mold slit was allowed to contour on a mandrel being cooled, and the outer surface thereof was sprayed with air from an air ring for cold molding. The obtained foamed body was cut with a cutter into a flat sheet to thereby obtain the foamed sheet.
The temperatures of the respective zones were set as follows: the first extruder: the raw material mixing and melting area a and the compressive fluid supplying area b: 190 degrees Celsius and the kneading area c: 150 degrees Celsius; and the second extruder heating area d: 167 degrees Celsius. The pressures of the respective zones were set as follows: from the compressive fluid supplying area b to the kneading area c and the second extruder heating area d: 7.0 MPa.

(Example 2)

In the same manner as in Example 1 except that the amount of the filler contained in the foamed body was 3% by mass, a foamed body and a foamed sheet of Example 2 were produced.

(Example 3)

In the same manner as in Example 1 except that filler (A) was changed to filler (B) and the amount of the filler contained in the foamed body was 0.1% by mass, a foamed body and a foamed sheet of Example 3 were produced.

(Example 4)

In the same manner as in Example 1 except that filler (A) was changed to filler (C) and the amount of the filler contained in the foamed body was 5% by mass, a foamed body and a foamed sheet of Example 4 were produced.

(Example 5)

In the same manner as in Example 1 except that the amount of the filler contained in the foamed body was 0.02% by mass, a foamed body and a foamed sheet of Example 5 were produced.

(Example 6)

In the same manner as in Example 1 except that polylactic acid resin (A) was changed to polylactic acid resin (B), a foamed body and a foamed sheet of Example 6 were produced.

(Example 7)

In the same manner as in Example 1 except that filler (A) was changed to filler (D) and the amount of the filler contained in the foamed body was 5% by mass, a foamed body and a foamed sheet of Example 7 were produced.

(Example 8)

In the same manner as in Example 1 except that the filler masterbatch was not produced and that the filler and the polylactic acid resin were introduced into the apparatus illustrated in FIG. 4, a foamed body and a foamed sheet of Example 8 were produced.
Specifically, they were produced in the following manner.
The continuous foamed sheet forming apparatus 110 illustrated in FIG. 4 was used to supply the filler (A) and the polylactic acid resin (A) so that the total flow rate thereof would be 10 kg/hr. In order for the filler to be 0.5% by mass, the flow rate of the polylactic acid resin (A) and the flow rate of the filler (A) were set to 9.5 kg/hr and 0.5 kg/hr, respectively. Carbon dioxide as the compressive fluid was supplied at 0.99 kg/h (equivalent to 10% by mass relative to the polylactic acid resin), followed by kneading. The kneaded product was sent to the second extruder.
The kneaded product was discharged at 10 kg/h from a circular mold having a slit diameter of 70 mm attached to the tip of the second extruder, and cooled to 167 degrees Celsius as the polylactic acid resin temperature. The kneaded product was extruded for foaming. The cylindrical polylactic acid foamed sheet after the extrusion foaming from the mold slit was allowed to contour on a mandrel being cooled, and the outer surface thereof was sprayed with air from an air ring for cold molding. The obtained foamed body was cut with a cutter into a flat sheet to thereby obtain the foamed sheet.
The temperatures of the respective zones were set as follows: the first extruder: the raw material mixing and melting area a and the compressive fluid supplying area b: 190 degrees Celsius and the kneading area c: 150 degrees Celsius; and the second extruder heating area d: 167 degrees Celsius. The pressures of the respective zones were set as follows: from the compressive fluid supplying area b to the kneading area c and the second extruder heating area d: 7.0 MPa.

(Example 9)

In the same manner as in Example 1 except that the amount of the filler contained in the foamed body was 0.01% by mass, a foamed body and a foamed sheet of Example 9 were produced.

(Example 10)

In the same manner as in Example 1 except that filler (A) was changed to filler (B) and the amount of the filler contained in the foamed body was 0.015% by mass, a foamed body and a foamed sheet of Example 10 were produced.

(Example 11)

In the same manner as in Example 1 except that polylactic acid resin (A) was changed to polylactic acid resin (C), a foamed body and a foamed sheet of Example 11 were produced.

(Example 12)

In the same manner as in Example 1 except that polylactic acid resin (A) was changed to polylactic acid resin (D), a foamed body and a foamed sheet of Example 12 were produced.

(Comparative Example 1)

In the same manner as in Example 1 except that the filler was not used, a foamed body and a foamed sheet of Comparative Example 1 were produced.

(Comparative Example 2)

In the same manner as in Example 1 except that the amount of the filler contained in the foamed body was 6% by mass, a foamed body and a foamed sheet of Comparative Example 2 were produced.

(Comparative Example 3)

In the same manner as in Example 1 except that filler (A) was changed to filler (E) and the amount of the filler contained in the foamed body was 7% by mass, a foamed body and a foamed sheet of Comparative Example 3 were produced.

(Comparative Example 4)

In the same manner as in Example 1 except that the kneading was performed without using a compressing fluid in the production of the filler masterbatch, a foamed body and a foamed sheet of Comparative Example 4 were produced.

The temperatures of the respective zones were set as follows: the raw material mixing and melting area a and the compressive fluid supplying area b: 190 degrees Celsius; the kneading area c: 190 degrees Celsius; the compressive fluid removing area d: 190 degrees Celsius; and the molding processing area e: 190 degrees Celsius.

In the following manners, each of the produced foamed bodies was measured for average foam diameter, bulk density, and thickness at which the ISO brightness would be 90% or more, and each of the foamed sheets was measured for thickness. Measurement results are presented in Table 1.

<Average foam diameter of the foamed body>

The foamed sheet was subjected to cross-section processing with an ion milling device and the resultant cross section was observed with a scanning electron microscope (SEM). Using software of Image-Pro Premier (available from mediacy Co.) for the obtained cross-section SEM image (at a magnification of ×3,000), the gray components representing the foams (pores) and the resin components (white) were binarized. In an area of 35 micrometers × 20 micrometers, the average particle diameter (Feret diameter) was determined. The gray components (foams) having Feret diameters of 0.5 micrometers or more were calculated for the average foam diameter of the foamed body.

Incidentally, the measurement was performed at 100 locations, and the average of the measurements was defined as the average foam diameter.

<Bulk density>

The bulk density was measured according to JIS K 7365.

<Thickness at which the ISO brightness was 90% or more>

The ISO brightness was measured with a spectral brightness meter/color difference meter (PF-10R, obtained from NIPPON DENSHOKU INDUSTRIES CO., LTD.). How to operate it was according to the instruction manual of the manufacturer, and the measurement was according to JIS P 8148:2001 "Paper, board and pulps-ISO brightness (diffuse blue light reflectance) measurement method".

<Thickness of the foamed sheet>

The thickness of the foamed sheet was the average value of thicknesses at five locations measured with a high precision digimatic micrometer (MDH-25MB, obtained from Mitutoyo Corporation).

Table 1

| | Kind of polylactic acid | Amount of polylactic acid (% by mass) | Kind of inorganic particles | Average particle diameter of inorganic particles (nm) | Amount of inorganic particles (% by mass) | Average foam diameter of foamed body (μm) | Bulk density of foamed body (g/cm³) | Thickness at which ISO brightness was 90% or more (μm) | Thickness of foamed sheet (mm) |
|---|---|---|---|---|---|---|---|---|---|
| Ex. 1 | A | 99.5 | Silica | 30 | 0.5 | 8 | 0.8 | 300 | 2.0 |
| Ex. 2 | A | 97 | Silica | 30 | 3 | 13 | 0.6 | 120 | 2.7 |
| Ex. 3 | A | 99.9 | Silica | 15 | 0.1 | 4 | 0.4 | 240 | 4.0 |
| Ex. 4 | A | 95 | Silica | 120 | 5 | 15 | 0.9 | 270 | 1.8 |
| Ex. 5 | A | 99.98 | Silica | 30 | 0.02 | 0.3 | 0.9 | 490 | 0.3 |
| Ex. 6 | B | 99.5 | Silica | 30 | 0.5 | 14 | 0.9 | 460 | 0.9 |
| Ex. 7 | A | 95 | Calcium carbonate | 700 | 5 | 20 | 0.7 | 500 | 2.3 |
| Ex. 8 | A | 99.5 | Silica | 30 | 0.5 | 15 | 0.9 | 480 | 1.8 |
| Ex. 9 | A | 99.99 | Silica | 30 | 0.01 | 0.009 | 0.9 | 500 | 0.3 |
| Ex. 10 | B | 99.985 | Silica | 15 | 0.015 | 0.01 | 0.9 | 500 | 0.3 |
| Ex. 11 | C | 99.5 | Silica | 30 | 0.5 | 15 | 0.01 | 500 | 4.0 |
| Ex. 12 | D | 99.5 | Silica | 30 | 0.5 | 5 | 1.0 | 420 | 0.7 |
| Comp. Ex. 1 | A | 100 | - | - | - | 21 | 0.9 | 660 | 1.8 |
| Comp. Ex. 2 | A | 94 | Silica | 30 | 6 | 22 | 0.9 | 510 | 1.8 |
| Comp. Ex. 3 | A | 93 | Calcium carbonate | 4400 | 7 | 120 | 0.6 | 560 | 2.9 |
| Comp. Ex. 4 | A | 99.5 | Silica | 30 | 0.5 | 23 | 0.8 | 530 | 2.0 |

In the following manners, the obtained foamed bodies were measured and evaluated for strength (bending modulus), flexibility (tensile-impact strength), and surface appearance. Evaluation results are presented in Table 2.

<Strength (bending modulus)>

The bending modulus was measured according to JIS K 7171 and was evaluated based on the following evaluation criteria. The bending modulus was a value analyzed by the tangent line method (the initial tangential gradient of a stress-strain curve).
A higher value of bending modulus indicates higher bending modulus resulting in higher strength.

-Evaluation criteria-

A: 2,100 MPa or higher
B: 1,400 MPa or higher but lower than 2,100 MPa
C: 1,200 MPa or higher but lower than 1,400 MPa
D: lower than 1,200 MPa

<Flexibility (tensile-impact strength)>

According to the JIS K 7160 A method, the tensile-impact strength was measured and evaluated based on the following evaluation criteria. A higher value indicates resistance to a stronger impact, with ranks A, B, and C being at a practically usable level.

-Evaluation criteria-

A: 27 kJ/m$^2$ or higher
B: 21 kJ/m$^2$ or higher but lower than 27 kJ/m$^2$
C: 13 kJ/m$^2$ or higher but lower than 21 kJ/m$^2$
D: lower than 13 kJ/m$^2$

<Surface appearance>

The sheet having an area of 100 mm $\times$ 100 mm was visually observed for presence or absence of pockmark-like irregularities and broken foam shapes, followed by evaluation based on the following evaluation criteria.

-Evaluation criteria-

A: The number of pockmark-like irregularities, broken foam shapes, and other unwanted marks was 0 or more but less than 5.
B: The number of pockmark-like irregularities, broken foam shapes, and other unwanted marks was 6 or more but less than 10.
C: The number of pockmark-like irregularities, broken foam shapes, and other unwanted marks was 11 or more.

Table 2

|  | Strength | Flexibility | Surface appearance |
| --- | --- | --- | --- |
| Ex. 1 | B | B | A |
| Ex. 2 | A | A | B |
| Ex. 3 | B | A | A |

(continued)

|  | Strength | Flexibility | Surface appearance |
|---|---|---|---|
| Ex. 4 | A | B | B |
| Ex. 5 | C | C | A |
| Ex. 6 | A | C | B |
| Ex. 7 | C | C | B |
| Ex. 8 | C | C | B |
| Ex. 9 | C | C | A |
| Ex. 10 | C | B | A |
| Ex. 11 | C | C | B |
| Ex. 12 | B | C | A |
| Comp. Ex. 1 | D | C | B |
| Comp. Ex. 2 | C | D | C |
| Comp. Ex. 3 | C | D | C |
| Comp. Ex. 4 | D | D | C |

Aspects of the present disclosure are as follows, for example.

<1> A foamed body including:

a polylactic acid resin; and

inorganic particles,

wherein a proportion of the polylactic acid resin in the foamed body is 95% by mass or more,

wherein a proportion of the inorganic particles in the foamed body is from 0.01% by mass or more but 5% by mass or less, and

wherein a thickness of the foamed body at which an ISO brightness of the foamed body is 90% or more is 500 micrometers or less.

<2> The foamed body according to <1>, wherein the foamed body has an average foam diameter of 0.01 micrometers or more but 15 micrometers or less.
<3> The foamed body according to <1> or <2>, wherein the foamed body has a bulk density of 0.02 g/cm$^3$ or more but 0.9 g/cm$^3$ or less.
<4> The foamed body according to any one of <1> to <3>, wherein the inorganic particles have a number average particle diameter of 5 nm or more but 100 nm or less.
<5> The foamed body according to any one of <1> to <4>, wherein the inorganic particles include silica, and a proportion of the silica to a total amount of the inorganic particles is 50% by mass or more.
<6> A foamed sheet including
the foamed body according to any one of <1> to <5>.
<7> The foamed sheet according to <6>, wherein the foamed sheet has an average thickness of 0.001 mm or more but 4 mm or less.
<8> The foamed sheet according to <6> or <7>, further comprising at least one of a lamination layer, a coating layer, and a surface vapor deposition layer, on at least one of a front surface and a back surface of the foamed sheet.
<9> A manufacture including
the foamed sheet according to any one of <6> to <8>.
<10> The manufacture according to <9>, wherein the manufacture is at least one kind selected from the group consisting of a bag, a packaging container, dishware, cutlery, stationery, and livingware.
<11> A method for producing a foamed sheet, the method including:

kneading a polylactic acid resin and inorganic particles in presence of a compressive fluid at a temperature lower than a melting point of the polylactic acid resin, to obtain a polylactic acid resin composition; and removing the compressive fluid from the polylactic acid resin composition to foam the polylactic acid resin composition.

<12> The method according to <11>, wherein the compressive fluid is carbon dioxide.

The foamed body according to any one of <1> to <5> above, the foamed sheet according to any one of <6> to <8> above, the manufacture according to <9> or <10> above, and the method according to <11> or <12> above can solve the various existing problems and achieve the object of the present disclosure.

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention.

**Claims**

1.  A foamed body comprising:

    a polylactic acid resin; and
    inorganic particles,
    wherein a proportion of the polylactic acid resin in the foamed body is 95% by mass or more,
    wherein a proportion of the inorganic particles in the foamed body is from 0.01% by mass or more but 5% by mass or less, and
    wherein a thickness of the foamed body at which an ISO brightness of the foamed body is 90% or more is 500 micrometers or less.

2.  The foamed body according to claim 1, wherein the foamed body has an average foam diameter of 0.01 micrometers or more but 15 micrometers or less.

3.  The foamed body according to claim 1 or 2, wherein the foamed body has a bulk density of 0.02 $g/cm^3$ or more but 0.9 $g/cm^3$ or less.

4.  The foamed body according to any one of claims 1 to 3, wherein the inorganic particles have a number average particle diameter of 5 nm or more but 100 nm or less.

5.  The foamed body according to any one of claims 1 to 4, wherein the inorganic particles comprise silica, and a proportion of the silica to a total amount of the inorganic particles is 50% by mass or more.

6.  A foamed sheet comprising
    the foamed body according to any one of claims 1 to 5.

7.  The foamed sheet according to claim 6, wherein the foamed sheet has an average thickness of 0.001 mm or more but 4 mm or less.

8.  The foamed sheet according to claim 6 or 7, further comprising at least one of a lamination layer, a coating layer, and a surface vapor deposition layer, on at least one of a front surface and a back surface of the foamed sheet.

9.  A manufacture comprising the foamed sheet according to any one of claims 6 to 8.

10. The manufacture according to claim 9, wherein the manufacture is at least one kind selected from the group consisting of a bag, a packaging container, dishware, cutlery, stationery, and livingware.

11. A method for producing a foamed sheet, the method comprising:

    kneading a polylactic acid resin and inorganic particles in presence of a compressive fluid at a temperature lower than a melting point of the polylactic acid resin, to obtain a polylactic acid resin composition; and

removing the compressive fluid from the polylactic acid resin composition to foam the polylactic acid resin composition.

# FIG. 1

# FIG. 2

FIG. 3

COMPRESSIVE FLUID

PELLET

100

a    b    c    d    e

FIG. 4

110

a    b    c    d

Europäisches
Patentamt

European
Patent Office

Office européen
des brevets

# EUROPEAN SEARCH REPORT

Application Number

EP 21 15 8184

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/086758 A1 (TAKASE KENICHI [JP] ET AL) 8 April 2010 (2010-04-08) * paragraphs [0082] - [0084]; examples 1-11; tables 2-3 * | 1-11 | INV. C08J9/00 C08J9/36 ADD. C08J9/12 |
| X | US 2018/251622 A1 (UCHIYAMA KOSUKE [JP] ET AL) 6 September 2018 (2018-09-06) * paragraphs [0104] - [0107], [0137] - [0141] * | 1-7,9,11 | |
| X | US 2007/027247 A1 (UEDA KAZUE [JP] ET AL) 1 February 2007 (2007-02-01) * paragraphs [0049] - [0057]; examples 1-13 * | 1-7,9-11 | |
| X,D | JP 2009 073955 A (TORAY INDUSTRIES) 9 April 2009 (2009-04-09) * paragraph [0037]; examples 1-7 * | 1-3,6,7, 9-11 | |

TECHNICAL FIELDS
SEARCHED (IPC)

C08J

The present search report has been drawn up for all claims

| Place of search | Date of completion of the search | Examiner |
|---|---|---|
| The Hague | 14 July 2021 | Mayer, Anne |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  ......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 15 8184

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2021

| Patent document cited in search report | | Publication date | Patent family member(s) | | Publication date |
|---|---|---|---|---|---|
| US 2010086758 | A1 | 08-04-2010 | US | 2007141286 A1 | 21-06-2007 |
| | | | US | 2010086758 A1 | 08-04-2010 |
| US 2018251622 | A1 | 06-09-2018 | CN | 107922662 A | 17-04-2018 |
| | | | EP | 3345959 A1 | 11-07-2018 |
| | | | JP | 6691754 B2 | 13-05-2020 |
| | | | JP | 2017048277 A | 09-03-2017 |
| | | | US | 2018251622 A1 | 06-09-2018 |
| | | | WO | 2017038881 A1 | 09-03-2017 |
| US 2007027247 | A1 | 01-02-2007 | CN | 1771291 A | 10-05-2006 |
| | | | DE | 60314783 T2 | 10-04-2008 |
| | | | EP | 1624024 A1 | 08-02-2006 |
| | | | JP | 4353902 B2 | 28-10-2009 |
| | | | JP | WO2004099315 A1 | 13-07-2006 |
| | | | KR | 20060036905 A | 02-05-2006 |
| | | | US | 2007027247 A1 | 01-02-2007 |
| | | | WO | 2004099315 A1 | 18-11-2004 |
| JP 2009073955 | A | 09-04-2009 | NONE | | |

For more details about this annex : see Official Journal of the European Patent Office, No. 12/82

**REFERENCES CITED IN THE DESCRIPTION**

**Patent documents cited in the description**

- JP 2007046019 A
- JP 5207277 B
- JP 5454137 B
- JP 2009073955 A

**Non-patent literature cited in the description**

- *Structure, physical properties, and biodegradability of aliphatic polyester of Polymer,* 2001, vol. 50 (6), 374-377